# EUROPEAN PATENT APPLICATION

(11) **EP 1 452 298 A1**
(43) Date of publication of application: **01.09.2004**
(21) Application number: 04250691.5
(22) Date of filing: 09.02.2004
(51) Int. Cl.: B29C 67/00

(54) **Methods and systems for producing an object through solid freeform fabrication using immiscible fluids**

(30) Priority: 28.02.2003 US 376827
(71) Applicant: Hewlett-Packard Development Company, L.P., Houston, Texas 77070 (US)
(72) Inventor: Hunter, Shawn D., Corvallis, OR 97330 (US); Kasperchik, Vladek P., Corvallis, OR 97330 (US)
(74) Representative: Jackson, Richard Eric

(57) **Abstract**

Methods and systems for producing an object (201) through solid freeform fabrication includes using two immiscible fluids to create a release envelope (300) around the object (201).

## Description

### BACKGROUND

Solid freeform fabrication is a process for manufacturing three-dimensional objects, for example, prototype parts, models and working tools. Solid freeform fabrication is an additive process in which an object, which is described by electronic data, is automatically built, usually layer-by-layer, from base materials.

Several principal forms of solid freeform fabrication involve a fluid ejection process. There are two main types of solid freeform fabrication that use liquid-ejection: binder-jetting systems and bulk-jetting systems.

Binder-jetting systems create objects by ejecting a binder onto a flat bed of powdered build material. Each powder layer may be dispensed or spread as a dry powder or a slurry. Wherever the binder is selectively ejected into the powder layer, the powder is bound into a cross section or layer of the object being formed.

Bulk-jetting systems generate objects by ejecting a solidifiable build material and a solidifiable support material onto a platform. The support material, which is temporary in nature, is dispensed to enable overhangs in the object and can be of the same or different material from the object.

In both cases, fabrication is typically performed layer-by-layer, with each layer representing another cross section of the final desired object. Adjacent layers are adhered to one another in a predetermined pattern to build up the desired object.

In addition to selectively forming each layer of the desired object, solid freeform fabrication systems can provide a color or color pattern on each layer of the object. In binder-jetting systems, the binder may be colored such that the functions of binding and coloring are integrated. In bulk-jetting systems, the build material may be colored.

Inkjet technology can be employed in which a number of differently colored inks are selectively ejected from the nozzles of a fluid ejection device and blended on the build material to provide a full spectrum of colors. On each individual layer, conventional two-dimensional multi-pass color techniques and half-toning algorithms can be used to hide defects and achieve a broad range of desired color hues.

A common problem with current solid freeform fabrication systems, however, is the migration of the binder beyond the intended object dimensions. Binder migration binds additional, undesired material to the object being formed. Binder migration results in a rough surface finish and poorly defined object features.

Most current solutions simply attempt to minimize the amount of binder ejected into the build material such that there is just enough binder applied to ensure full penetration of the current layer of build material. Even so, this minimization provides excess binder to the build material to ensure binding to any previous object layers. Excess binding fluid tends to migrate until it has reacted with a sufficient quantity of build material to absorb all of the binder and end the migration. Therefore, surfaces of fabricated objects, especially at first layers of an object where there is no previous layer to bind to, almost always include problematic fluid migration beyond the intended object boundaries. Again, this migration results in rough surface finishes and inaccurate dimensions.

One specific solution to the binder migration issue is a migration inhibitor mixed with a bulk powder or build material. The migration inhibitor is mixed throughout the build material, even though use of migration inhibitor will only be needed at specific locations.

While intermixing a migration inhibitor with the bulk powder may confine migration to a smaller region than without the inhibitor, the quality of the surface finish will still be the result of the migration of fluids through the powder particles. The binder fluid must migrate into and interact with the powder or it will not solidify. Fluid migration has many dissimilar influences (particle sizes and locations, capillary action, materials reactivity, gravity, etc.). Therefore, objects fabricated according to the prior art may still have a non-smooth surface finish and inaccurate dimensions.

Further, it is not uncommon for one or more devices used to apply binder fluid in solid freeform fabrications systems to become misaligned. When binder application devices are misaligned, the dimensions of the objects fabricated are even less accurate, and the surfaces produced may be even rougher than would be the case otherwise. The further out of alignment the devices become, the more pronounced the binder migration will be beyond the intended object dimensions.

### SUMMARY

In one of many possible embodiments, the present invention provides a method of producing an object through solid freeform fabrication using two immiscible fluids to create a release envelope around the object.

### BRIEF DESCRIPTION OF THE DRAWINGS

The accompanying drawings illustrate various embodiments of the present invention and are a part of the specification. The illustrated embodiments are merely examples of the present invention and do not limit the scope of the invention.

FIG. 1 illustrates a solid freeform fabrication system that uses a fluid ejection process to fabricate desired products. An embodiment of the present invention can be implemented with the system illustrated in Fig. 1.

FIG. 2A illustrates a side view cross section of an object being fabricated using two immiscible fluids according to one embodiment of the present invention.

FIG. 2B illustrates a side view of a fabrication sequence using two immiscible fluids according to one embodiment of the present invention.

FIG. 2C illustrates a side view of another fabrication sequence using two immiscible fluids according to one embodiment of the present invention.

FIG. 2D illustrates a side view of another fabrication sequence using two immiscible fluids according to one embodiment of the present invention.

FIG. 2E illustrates a side view of another fabrication sequence using two immiscible fluids according to one embodiment of the present invention.

FIG. 2F illustrates a side view of another fabrication sequence using two immiscible fluids according to one embodiment of the present invention.

FIG. 3 illustrates a top view cross section of an object being fabricated using two immiscible fluids according to one embodiment of the present invention.

FIG. 4 illustrates a side view of an object completed according to one embodiment of the present invention.

Throughout the drawings, identical reference numbers designate similar, but not necessarily identical, elements.

### DETAILED DESCRIPTION

The techniques and system described herein seek to provide solid freeform fabrication of desired objects with an improved surface finish and accurate surface feature dimensions. These techniques and systems recognize that objects can be created with a more desirable surface finish and more accurate dimensions by using a combination of at least two immiscible fluids.

As used throughout this specification, and in the appended claims, the terms "immiscible" or "immiscible fluid" refer to two or more different fluids that do not normally mix. It will be appreciated, however, that immiscible fluids will sometimes mix under certain conditions or with the aid of a surfactant, emulsifier or other substance. As used herein, "immiscible" refers to such substances that do not normally mix, even though the substances referred to may mix under certain conditions or with the addition of other materials. Consequently, the use of the term "immiscible fluid" is intended to indicate one of two fluids that tend to repel one another and to minimize any area of contact between bodies of the two fluids. These terms do not refer to any specific fluids.

In addition, the term "binder" includes any substance (such as a clear or colored adhesive) used to bind a build material and is not specific to any one chemical composition. The term "ink" is used to refer generally to any ink, toner, colorant or color fluid used to add color to an object being created by freeform fabrication.

According to the principles described herein, one of two immiscible fluids is a binder, an ink, or a combination of a binder and an ink for building an object by solid freeform fabrication. The other of the two immiscible fluids is referred to as a "release fluid," which is immiscible with the binder, ink or binder/ink combination.

The first of the two or more immiscible fluids may be used to bind, build, and/or color a layer of build material used to fabricate an object. The second of the two immiscible fluids may be used to encase, separate, and/or define surfaces of the object. The interaction of the two or more immiscible fluids creates a release envelope around the object that helps provide a smooth, dimensionally accurate, surface finish. As used herein, a "release envelope" means a perimeter or border at a surface or boundary of an object being formed through freeform fabrication. Release envelopes may be continuous or discontinuous, although a continuous envelope may be preferred.

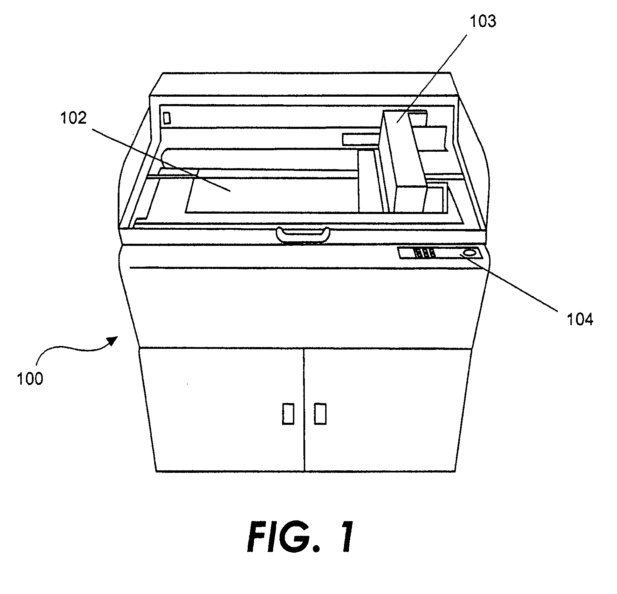

Turning now to the figures, FIG. 1 illustrates one solid freeform fabrication system that may be used to implement aspects of the present invention. The solid freeform fabrication system (100) of FIG. 1 uses a build material such as a bulk powdered substance to form each individual layer of a desired object. A quantity of powder is provided from a supply chamber to build each layer. A roller, preferably incorporated into a moving stage (103), distributes and compresses the powder at the top of a fabrication chamber (102) to a desired thickness.

A fluid ejection device (e.g. an inkjet printhead, such as a drop-on-demand printhead) may be disposed on the moving stage (103) of the solid freeform fabrication system (100). The solid freeform fabrication system (100) may include multiple fluid ejection devices, each separately containing one of the immiscible fluids to be ejected. Alternatively, according to some embodiments, the fluid ejection device may be separate from the moving stage (103), or on a second moving stage separate from the stage that distributes the build material layers.

As indicated above, one of the two or more immiscible fluids is preferably a binder that may be colored by ink. There may be multiple compartments of the fluid ejection device that contain multiple colors of binder or ink, and/or one or more fluids immiscible with the binder. The binder may be an aqueous or water-based solution, although this is not necessarily so. According to some embodiments, the binder is about 20-100% water, preferably about 60-95% water. As discussed above, the binder is used to solidify the build material to which it is selectively applied.

The other of the two or more immiscible fluids is a release fluid or migration control substance that is immiscible with the binder. The release fluid may be an oil or other fluid that is immiscible with the binder. For example, if the binder is water-based, the release fluid may include, but is not limited to: silicone oils, non-polar hydrocarbons (preferably those that are non-volatile at room temperatures), chlorinated solvents, and liquid fluorocarbons. Silicone oils may be particularly useful because of their benignity, but any two immiscible fluids may be used. However, if the binder is a non-aqueous substance, then the release fluid may be some other fluid which: (a) does not react with the powder (i.e. does not bind powder particles together), and (b) is immiscible with the binder. Thus, selection of the release fluid is dependent on the nature of the build material and binder used.

It is desirable, but not imperative, that the release fluid has significantly higher viscosity than the binder. By choosing a release fluid with high viscosity, the tendency of the release fluid to migrate through the build material is reduced. It is also desirable, but not imperative, to choose a binder of lower viscosity than the release fluid. A low viscosity binder facilitates quick wetting and interaction with the powdered build material. Accordingly, one particular embodiment includes an aqueous binder and a higher viscosity silicone oil.

In addition, it will be understood that materials used for the binder and release fluids may be reversed. That is to say, the release fluid may in some embodiments be aqueous or water-based (according to the same percentages described above or others), and the binder may include the oil or other materials described above with reference to the release fluid. The two or more immiscible fluids are not limited, however, to the material sets described above. Any two immiscible fluids may possibly be used, provided that the binder does indeed bind the build material in an acceptable manner. The two or more immiscible fluids may be grouped with a build material, such as bindable bulk powder, to form a material set for use in solid freeform fabrication systems.

The fluid ejection device of the solid freeform fabrication system (100) applies the two or more immiscible fluids in a predetermined pattern to the build material according to electronic data defining the object to be formed. The release fluid may be applied or deposited into layers of the build material in a two dimensional pattern at object boundary locations. Accordingly, the release fluid may be applied in a solid pattern at horizontal top and bottom object surfaces and may be applied about a perimeter of internal cross sections of objects that include vertical or angled surfaces. The release fluid may be deposited in each cross-sectional layer at the intended surfaces of the object being formed.

The fluid ejection device also applies or deposits binder into the build material layers of the fabrication chamber (102) in a two dimensional pattern. This two-dimensional pattern saturated with binder is a cross section of the object being formed. As mentioned above, the binder may be colored with ink to provide a desired color or color pattern for each particular cross sections of the object being formed. The release fluid may be applied before the binder is applied. However, the application of release fluid, binder, and new layers of powder may be in any order, or there may be several interspersed applications of release fluid, binder, and/or powder.

The powdered build material becomes bonded in the areas where the binder is deposited, thereby forming a layer of the object being formed. The process is repeated with a new layer of powder being applied over the top of the previous layer in the fabrication chamber (102). The next cross section of the desired product is then saturated with binder and release fluid, the release fluid being applied only at object boundaries or portions of object boundaries. In addition to binding the build material layer itself, the binder also serves to bind together the adjacent or successive layers of the object being formed.

This process continues until the entire object is formed within the powder bed in the fabrication chamber (102). The extra build material that is not bonded by the binder and the release fluid portions may be brushed or washed away leaving the finished object. A user interface or control panel (104) is provided to allow the user to control the fabrication process.

As noted above, the moving stage (103) of the solid freeform fabrication system (100) may include inkjet technology, such as drop-on-demand or continuous inkjet devices, for selectively ejecting colored binder and release fluids into the layers of the build material. Using inkjet technology, the moving stage (103) may include one or more fluid ejection devices as discussed above to eject ink and/or binder in a selective pattern to create the object being fabricated.

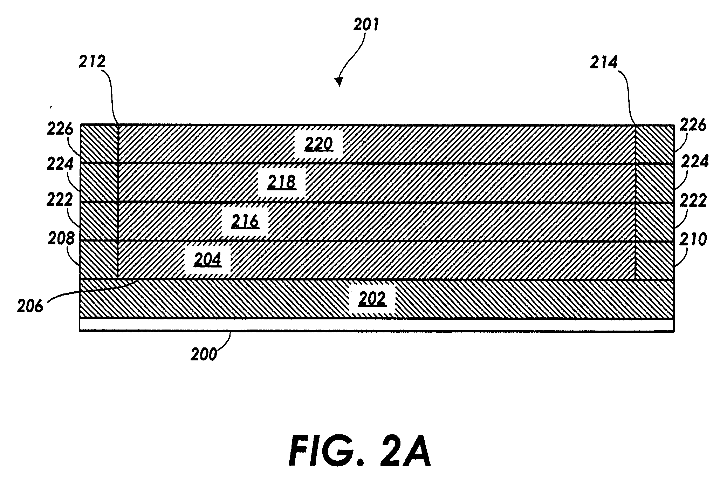

However, instead of applying only binder and ink to the build material, release fluid may also be applied in each layer of the build material to define surfaces of the object being formed. FIG. 2A further illustrates the solid freeform fabrication method according to this technique. As illustrated in FIG. 2A, the process of building an object (201) by solid freeform fabrication usually begins with a layer of build material (e.g., a powder or slurry) (200). In order to inhibit binder fluid migration and create a clean release envelope around the object (201) with a smooth surface and fine, accurate surface features, the release fluid is applied at the object boundaries.

As a build approaches object geometry, release fluid is first applied to a region below the object geometry. This region may extend beyond exact boundaries of the object geometry as its purpose is to ensure adequate migration control of the less viscous binding fluid. According to various embodiments of the invention, one or more build material layers prior to a first layer (204) of the object may have release fluid applied thereto. The one or more build layers containing release fluid define a release layer (202). In a preferred embodiment, release fluid is applied to about two layers of build material prior to the first layer including object geometry. Layers of build material containing release fluid provide a definite boundary beyond which a binder fluid will not migrate and define a bottom surface (206) of the object (201) being formed. Binder fluid will not migrate beyond the release layer (202) because the release fluid/release layer is immiscible with the binder fluid.

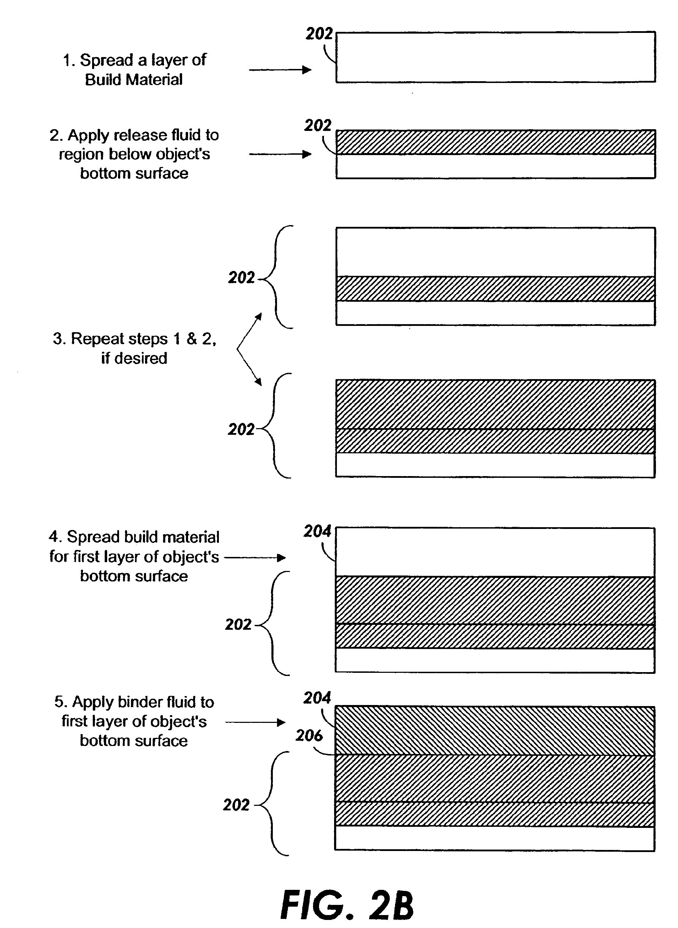

According to one embodiment of the invention illustrated in FIG. 2B, a layer of build material is distributed across the release layer (202). This layer of build material distributed across the release layer (202) becomes the first layer (204) of the object (201, FIG. 2A) when binder is applied. The interface between the release layer (202) and the first layer (204) defines the horizontal bottom surface or boundary (206) of the object.

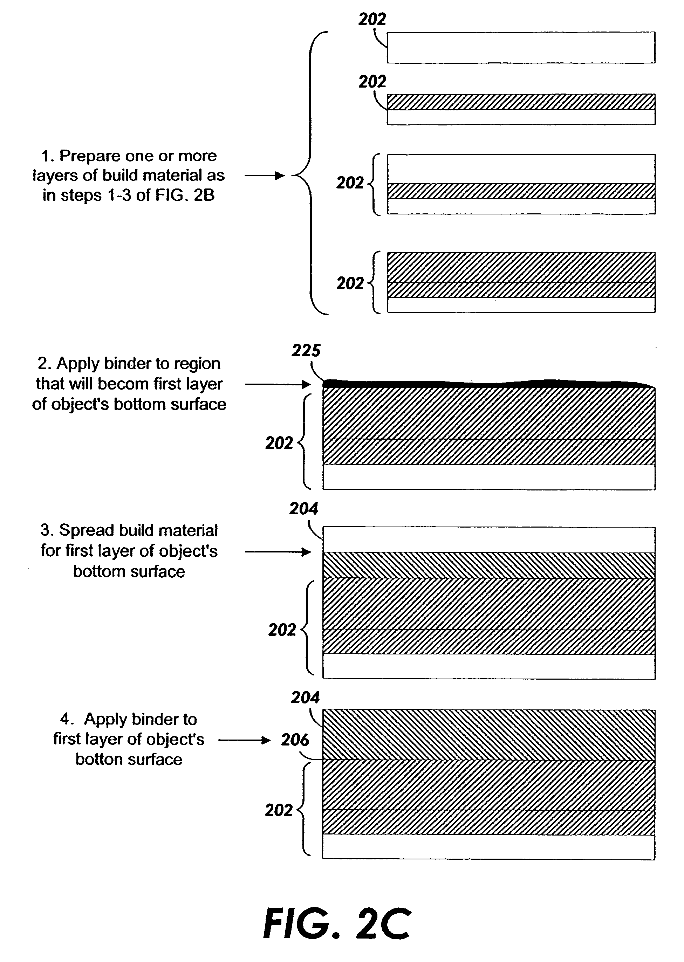

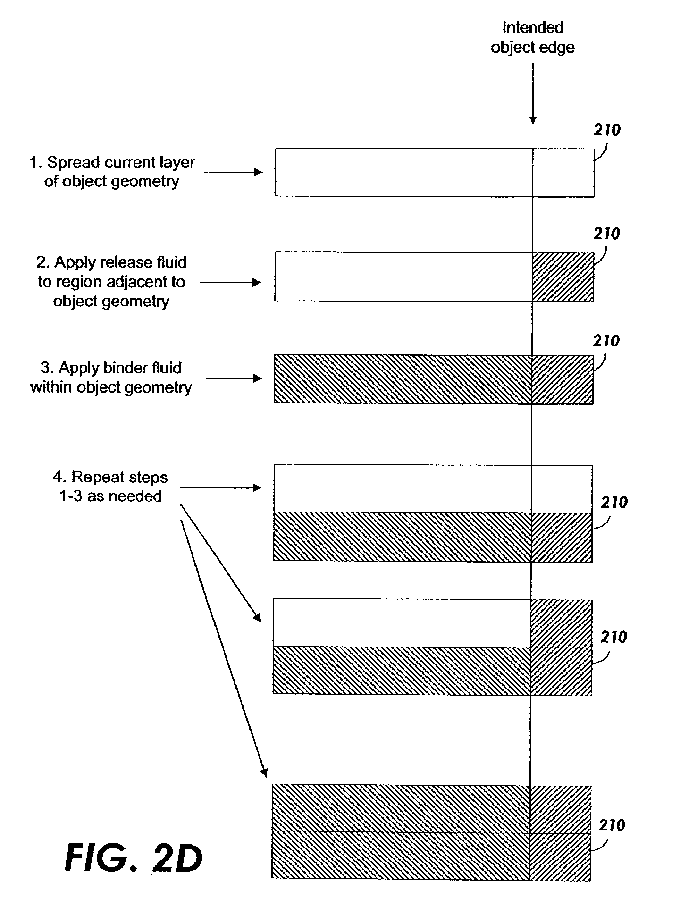

According to another embodiment of the invention illustrated in FIG. 2C, an amount of binder (225) may be applied directly on top of the release layer (202) within the region of object geometry to be formed by the first layer (204) of the object (201). A layer of build material is then distributed and additional binder may be applied within the geometry of the object being formed to create the first layer (204) shown. Again, the interface between the release layer (202) and the first layer (204) defines a horizontal bottom surface or boundary (206) of the object.

Additionally, referring again to FIG. 2A, a volume of release fluid is selectively applied at portions (208 and 210) of the first (204) and subsequent object layers adjacent to the surface boundaries within that layer of the object being formed. The release portions (208 and 210) of the first (204) and subsequent layers provide vertical boundaries beyond which binding fluid will not migrate.

A volume of binder fluid is then applied between the release portions (208 and 210) of the first layer (204) according to electronic data representing the object being formed (201). The binder solidifies the powder that will become the desired object. The interfaces between the release portions (208 and 210) and the bound portion of the first layer (204) define the vertical surfaces or boundaries (212 and 214) of the object (201). The bottom surface (206) and the vertical surfaces (212 and 214) are exceptionally smooth and definite because the release fluid is immiscible with the binder fluid as further described below. Although the finished object may not appear to have only horizontal and vertical surfaces on a macro-scale, the object (201) is built layer-by-layer such that on a micro-scale each layer does include only horizontal and vertical surfaces (206/212/214, etc.) bounded by release portions (202/208/210, etc.).

This layering process is repeated as many times as necessary to produce the object (201), with each layer preferably including release portions limiting binder migration and defining smooth object surfaces. In the example of FIG. 2A, only an additional second, third, and fourth layers (216/218/220) of an object are shown, each with a portion (222/224/226, respectively) of that layer containing release fluid at object boundaries or outer surfaces (212 and 214).

FIG. 2D further illustrates this method of fabricating well-defined vertical object boundaries using the release fluid. According to FIG. 2D, the release fluid is added to the release portion (210) prior to applying binder. However, according to some embodiments the binder is applied first.

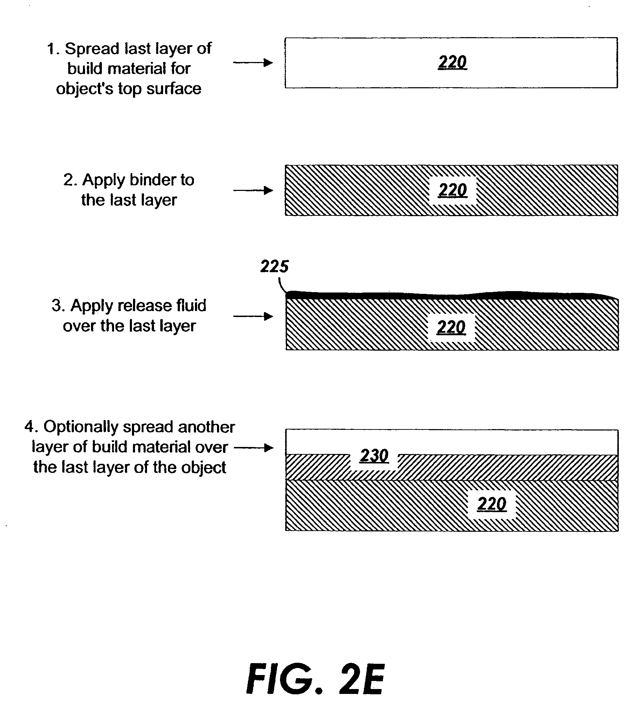

When a bound object region will not have additional object geometry directly above it in the next layer, this is considered, at least locally, to be the last or top object layer (220) as shown in FIG. 2E. It is not necessary that there be no remaining object geometry to be formed elsewhere in this or later layers for a region to be considered a top layer within a region of consideration. In top-layer regions, application of binder to the top layer (220) of the object (201) may be followed by various steps according to many possible embodiments of the invention.

According to the embodiment of FIG. 2E, the application of binder to the last or top object layer (220) may be followed directly with an application of release fluid (225). An additional layer (230) of build material may be spread over the last object layer (220) which absorbs the release fluid (225).

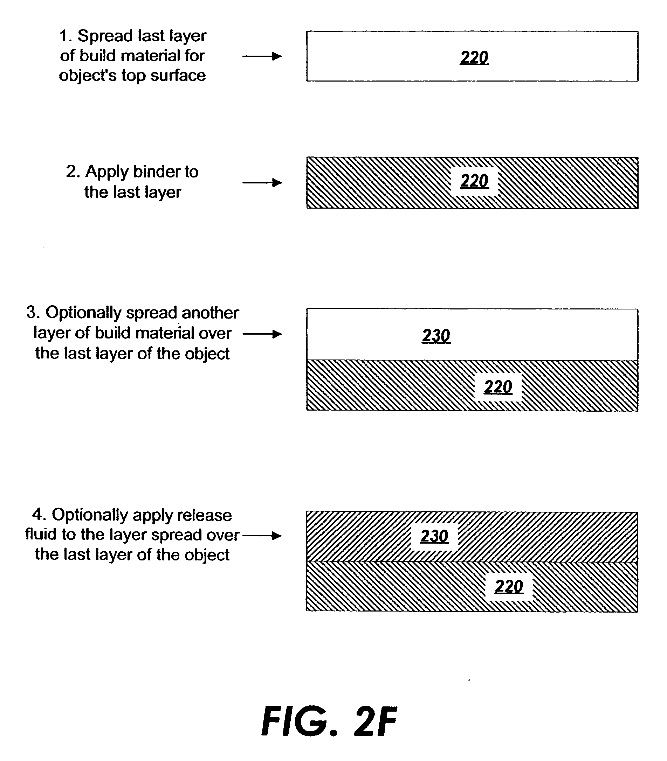

Other embodiments such as the one shown in FIG. 2F may include spreading the additional layer (230) of build material over the last or top layer (220) prior to applying release fluid above the top-layer region. Of course, if the top-layer region is also the last layer of both the object and the current build, additional applications of release fluid and build material may not be carried out.

It will be understood, of course, that when all of the layers of the object are complete, the object will be at least partially encased within a release envelope made of release fluid applied adjacent to the object's surface. In addition, in some embodiments certain regions or layers of the object may not include any release fluid portions.

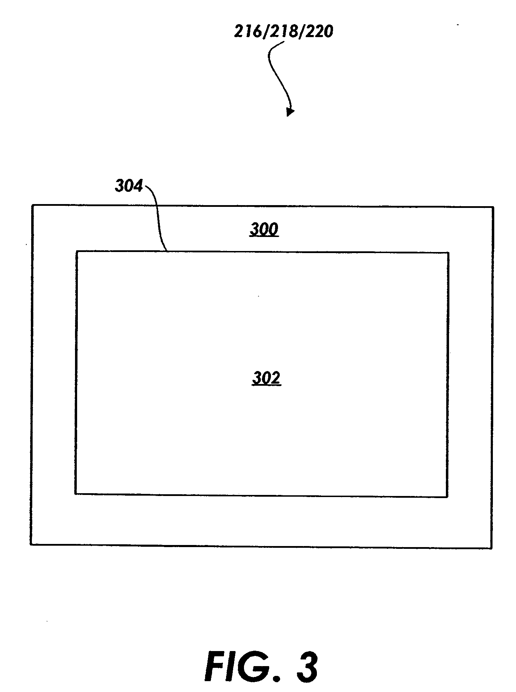

FIG. 3 illustrates a top-view of an interior cross sectional layer (such as the layers (216/218/220) shown in FIG. 2) of an object being formed. For simplicity, the object being formed (302) is simply a rectangular block.

A release envelope (300) made of build material powder and release fluid is located around the perimeter of the object (302). The release envelope (300) is shown as a continuous perimeter in the figure, however, according to some embodiments there may be discontinuities in the release envelope (300). The binder fluid is ejected into the build material-interior of the release envelope (300)--to solidify the object layer. Further, because the binder fluid and release fluid are immiscible, the binder fluid does not migrate beyond the interface (304) between the release envelope (300) and the perimeter of the object (302). The immiscibility of the binder and release fluid results in a well-defined object boundary and a smooth surface.

As discussed above with reference to FIG. 2A, the interfaces between the release layer portions (222, etc.) and the object layers (204, etc.) define the object surface (206/212/214). Whereas previous solid freeform fabrication methods typically allow the binder to migrate through the build material uncontrolled, resulting in rough, dimensionally inaccurate surfaces, the use of two or more immiscible fluids generates a clean release envelope around the object. The smooth surface (206/212/214) is generated as the immiscible object layers (204, etc.) and the release layers or portions (202/208, etc.) "repel" one another and therefore minimize their contact area.

It is well known to those of skill in the art having the benefit of this disclosure that immiscible substances do not mix and instead "repel" one another at well-defined interfaces. The presence of two or more immiscible fluids in the build material, applied in predetermined patterns, results in an increase in the interfacial energy or tension at the interfaces between the binder-laden build material and the release fluid-laden build material. The larger the interface area separating the immiscible substances, the higher the interfacial energy. Because every system minimizes its energy in order to reach an equilibrium state (one of the fundamentals of thermodynamics), the two or more immiscible substances minimize any mutual contact area. Therefore, as the layer portions containing the release fluid minimize contact area with the layer portions containing binder fluid, the surface area of the fabricated object is also reduced. The result of reducing the surface area of the object is a smoothing of its surface.

Further, because of the immiscibility of the release and binder fluids ejected into the build material, the application of the release fluid to the build material at the boundaries of the object defines very precisely where the migration of the binder fluid will end. The precise boundary control facilitates not only a smooth surface, but also improved dimensional accuracy of surface features. In addition, because the object boundaries are defined by the release fluid, there is less loss of dimensional accuracy due to fluid ejection device misalignment, regardless of how many devices are used to apply binder fluid.

Further, the application of release fluid may also allow higher (preferably optimized) binder saturation levels within the object boundaries, instead of the typical use of a minimum amount of binder used at object boundaries to solidify the layer without excess migration. Optimizing binder saturation levels at the object boundaries results in greater object strength as compared to conventional processes of minimizing binder levels at object boundaries.

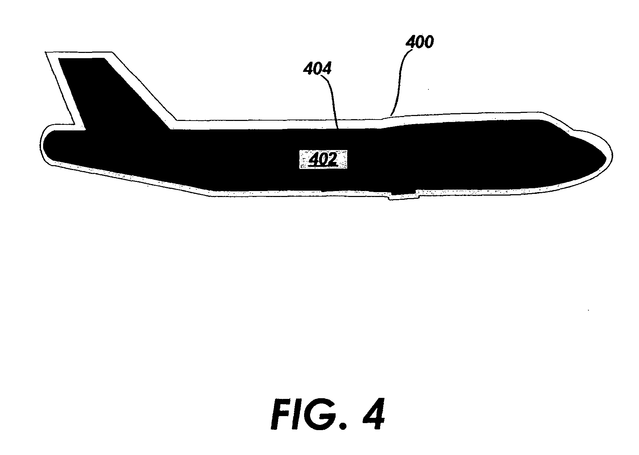

When the object has been completed according to methods described above, there is an outer release layer (400) at least partially encasing the object (402) as illustrated by example in FIG. 4. The outer release layer (400) is not part of the object (402) produced, but is instead the object boundary layer defining the outer surface (404) of the object (402). Therefore, the outer release layer (400) may be removed to reveal the base or finished object (402).

According to some embodiments, the release layer (400) may simply be brushed off. However, when the release layer (400) is created with an oil-based fluid or other substance, the object (402) may be washed with a detergent, solvent, or other substance to remove the release layer (400) and any residual oil or other release fluid.

In another possible embodiment the release layer can be formed by a material which is a jetted liquid which solidifies after being absorbed by a powdered build material. The jetted liquid could be a wax with a solidification point above the object's ambient temperature. The wax would be non-wettable with and immiscible with (not-soluble in) the binder fluid.

The foregoing embodiments were chosen and described in order to best illustrate the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A method of'producing an object (201) through solid freeform fabrication, said method comprising applying two immiscible fluids to a build material.

2. The method of claim 1, wherein a first of said two immiscible fluids comprises a binder (225) used to selectively solidify said build material.

3. The method of claim 2, wherein a second of said two immiscible fluids comprises a release fluid applied at object boundaries.

4. The method of claim 1, wherein said solid freeform fabrication comprises a fluid ejection device, said method further comprising:
ejecting drops of said two immiscible fluids on said build material in a predetermined pattern.

5. A solid freeform fabrication material set comprising:
a bulk powder substance;
a binder fluid; and
a migration control substance immiscible with said binder fluid.

6. A method of controlling or limiting binder migration in solid freeform fabrication comprising: applying a release fluid at object surfaces, wherein said release fluid is immiscible with an object (201) build material, an object build material binder, or both.

7. A solid freeform fabrication system (100) for producing a desired object (201) from electronic data, said system comprising:
a fabrication chamber (102) for holding a bed of powdered build material; and
a moving stage (103) for distributing successive layers of powder in said fabrication chamber (102); and
a fluid ejecting apparatus for selectively ejecting a volume of binder into each layer of powder and for ejecting a volume of release fluid into layers of powder at object boundaries;
wherein said release fluid is immiscible with said binder.

8. A method of fabricating an object (201) through solid freeform fabrication, said method comprising:
depositing a layer of build material;
depositing a first fluid on the layer of build material; and
depositing a second fluid on the layer of build material;
wherein said first fluid is immiscible with said second fluid.

9. A method of reducing surface roughness of an object (201) fabricated by a solid freeform fabrication system (100) that uses an inkjet process to build successive cross sections of said object (201) being fabricated, said method comprising applying a migration inhibiting fluid at object boundaries.

10. A method of producing a desired surface finish on an object (201) produced through solid freeform fabrication, said method comprising: using two immiscible fluids to create a release envelope (300) around said object (201).
